# EUROPEAN PATENT APPLICATION

(11) **EP 1 418 459 A1**
(43) Date of publication of application: **12.05.2004**
(21) Application number: 02425685.1
(22) Date of filing: 08.11.2002
(51) Int. Cl.: G02B 27/14, F21V 8/00, F21S 11/00

(54) **Optical device comprising cubo-octahedral polyhedron as light flux splitter or light diffusing element**

(71) Applicant: 3M Innovative Properties Company, St. Paul, MN 55133-3427 (US)
(72) Inventor: Tellini, Serena Regina Paola, 20129 Milano (IT); Iannone, Francesco, 20129 Milano (IT)
(74) Representative: Riccardi, Elisa

(57) **Abstract**

An optical device comprising a plurality of surfaces arranged according to the outer surface of an irregular polyhedron comprising eight surfaces having the shape of an equilateral triangle and six surfaces having a quadrangular shape, the sides of each quadrangular surface being each adjacent to a side of a respective triangular surface, wherein each surface of said plurality of surfaces is selected from the group comprised of an essentially transparent surface, an essentially internally reflecting surface, an essentially externally diffusing and internally reflecting surface, an essentially internally diffusing surface and an essentially opaque surface, at least one of said surfaces being a light input surface and at least one of said surfaces being a light output surface.

## Description

The present invention relates to an optical device and a light guide system comprising it.

Light guides are known (see e.g. US 4,260,220) and are essentially tubular constructions which surface is essentially totally internally reflecting. The light rays entering the light guide at a first end thereof propagate within the tubular construction through a series of successive reflections, arriving at the opposite end.

When the surface of the light guide is also partially externally diffusing, a portion of the light rays are guided towards the second end of the tubular construction, while a portion of the light rays exit the tubular construction, creating a so-called light guide lamp, as described e.g. in US 4,787,708.

The light guides and light guide lamps obtained using totally internally reflecting films (or TIR films, acronym of English words Total Internal Reflection) are particularly effective.

Such TIR films are for example known from European patent n° EP 0 225 123, to which reference is made for a detailed description of their characteristics; an example of such TIR films are those manufactured and marketed by Minnesota Mining and Manufacturing Company, St. Paul, Minnesota, U.S.A., under the trade name 3M^{TM} Optical Lighting Film (briefly, OLF). They are in the form of flexible sheets or webs, having a surface with a sequence of parallel micro-relieves, essentially of triangular cross-section, hereinafter referred to as micro-prisms; such films may be applied to the internal surface of opaque or, respectively, transparent tubes, with the micro-relieves axially oriented with respect to the tube and facing outwards, thus creating an effective light guide or, respectively, light guide lamp.

Indeed, due to the optical characteristics of said films and as described for example in US 4,805,984 which is referred to for further details, the light forming with the longitudinal axis of the light guide an angle smaller than a critical angle θₘₐₓ is always internally reflected, while the light forming with the longitudinal axis of the light guide an angle θ greater than angle θₘₐₓ is internally reflected if it is incident on the TIR film with an angle, with respect to the normal thereto, smaller than a given angle, depending on angle θ.

Angle θₘₐₓ depends on the characteristics of the TIR film. For the 3M^{TM} Optical Lighting Film 2301 film, it is 27.6°.

Suitable elements, called light extractors, and typically comprising a white diffusing surface, may be inserted within the light guide of light guide lamps, or applied to its walls, to cause a controlled diffusion of a portion of the light travelling within the light guide, thus causing some of the light rays to be deflected and become incident on the optical film with such angles as to exit from the light guide.

In other words and considering the TIR film, particularly OLF, in a plane configuration, the light incident on the side free of micro-prisms with sufficiently small angles of incidence, with respect to the normal to the surface (i.e., smaller than the above-mentioned angle θ) is reflected with a very high reflection coefficient (intended as the ratio of the amount of incident light to the amount of reflected light), about 98%.

For the light incident on the side free of micro-prisms with greater angles of incidence, with respect to the normal to the surface, the component in the direction of the micro-prisms is divided in two beams, in directions each forming an angle equal to the critical angle θₘₐₓ with the direction of incidence (in the manner of a "Y"): one of the two beams propagates on the incidence side (i.e., there is a reflection), and the other beam propagates on the other side (i.e., there is a transmission) if the direction of incidence forms, with the film plane, an angle smaller than the critical angle θₘₐₓ, while both beams propagate on the opposite side, that is there is transmission only, if the angle of incidence forms, with the film plane, an angle greater than the critical angle θₘₐₓ. The component in the direction perpendicular to the direction of the micro-prisms propagates spreading into a blade on the side opposite to the incidence side (i.e., there is a transmission with diffusion).

Considering again the TIR film in a plane configuration, the light incident on the side provided with the micro-prisms is transmitted or reflected with an analogous behavior, but with less diffusion.

Such films have therefore a selectively reflecting and diffusing behavior.

Another material used in light guide optical systems are the so-called "Multilayer optical film", described for example in US 5,882,774 and manufactured by Minnesota Mining and Manufacturing Company under the trademarks "VIKUITI High Reflectivity Visible Mirror Film", "3M^{TM} Radiant Light Film", "3M^{TM} Radiant Color Film", "3M^{TM} Radiant Mirror Film".

The VIKUITI High Reflectivity Visible Mirror Films have highly reflecting optical properties, essentially independent of the angle of incidence of the light with respect to the normal to the surface. Indeed, also the incident light essentially grazing the surface of the VIKUITI High Reflectivity Visible Mirror Film is reflected with a very high reflection coefficient, essentially equal to 98%.

The "3M^{TM} Radiant Light Film", "3M^{TM} Radiant Color Film", "3M^{TM} Radiant Mirror Film" films have the property of separately transmitting and reflecting various chromatic components, depending on the number and nature of the layers comprising them. Depending on the incidence angle, the reflected or transmitted light may therefore be seen in different colors.

The prior art light guide systems allow the transportation of the light, possibly along with lighting along the path in the case of light guide lamps, to remarkable distances (even more than 40 meters, also as a function of optional extractors). They are however, by nature and conception, essentially unidirectional. That is to say, in known light guides and lamps, only deflections with sufficiently great bending radiuses may be made.

The technical problem at the basis of the present invention is that of providing an optical device allowing to enhance the versatility and performance of the lighting systems in general, and particularly of the light guide lighting systems, eliminating the above constraints of being essentially unidirectional.

The invention relates, in a first aspect thereof, to an optical device comprising a plurality of surfaces arranged according to the outer surface of an irregular polyhedron comprising eight surfaces having the shape of an equilateral triangle and six surfaces having a quadrangular shape, the sides of each quadrangular surface being each adjacent to a side of a respective triangular surface, wherein each surface of said plurality of surfaces is selected from the group comprised of an essentially transparent surface, an essentially internally reflecting surface, an essentially externally diffusing and internally reflecting surface, an essentially internally diffusing surface and an essentially opaque surface, at least one of said surfaces being a light input surface and at least one of said surfaces being a light output surface.

In the present description and in the attached claims, under the expression "essentially transparent surface" it is meant that the light incident on the surface from the internal (or respectively external) side of the polyhedron is transmitted outwardly (or respectively inwardly) of the polyhedron with a transmission coefficient, intended as the ratio of the amount of transmitted light to the amount of the incident light, close to unit.

In the present description and in the attached claims, under the expression "essentially internally reflecting surface" is meant that the light incident on the surface from the internal side of the polyhedron is reflected within the polyhedron with a reflection coefficient, intended as the ratio of the amount of reflected light to the amount of the incident light, close to unit.

In the present description and in the attached claims, under the expression "essentially externally diffusing and internally reflecting surface" is meant that the light incident on the surface from the internal side of the polyhedron, depending on the angle of incidence, is diffusely transmitted outwardly of or reflected within the polyhedron with a transmission or respectively reflection coefficient close to unit.

In the present description and in the attached claims, under the expression "essentially internally diffusing surface" is meant that the light incident on the surface from the external side of the polyhedron is diffusely transmitted inwardly with a transmission coefficient close to unit.

In the present description and in the attached claims, under the expression "essentially opaque surface" is meant that the light incident on the surface from the internal side of the polyhedron is absorbed with a high, preferably close to unit absorption coefficient, intended as the complementary to 1 of the sum of the reflection and transmission coefficients.

In the practice of the invention, the plurality of surfaces may comprise altogether the optical device of the invention, or there may be a frame for supporting suitable materials for the various surfaces, as specified hereinbelow.

The materials comprising the various surfaces of interest are preferably, but not necessarily, internally applied to the frame, if present.

Although the optically active surfaces result of a slightly smaller size than the geometrical surfaces of the polyhedron if the materials comprising the various surfaces are externally applied to the frame, in any case in the following description and the attached claims reference will be briefly made to the optically active surfaces as if they coincided with the geometrical surfaces of the polyhedron.

The material of the frame, if provided for, will be typically stiff, for example aluminum, plastics, etceteras, possibly colored and/or decorated.

The frame might comprise only the edges between pairs of adjacent surfaces, or also those surfaces optionally provided for which are essentially opaque.

The frame may also be a single piece or it may be detachable or hinged at one or more of the edges of the polyhedron, so that it may be unfolded, for example for transportation and stocking.

The essentially transparent surfaces, if present, may be virtual, that is to say free of material, or they may be comprised of a highly transparent material, such as glass, methacrylate, polycarbonate, 3M^{TM} Radiant Color Film, 3M^{TM} Radiant Light Film, 3M^{TM} Radiant Color Film in association with glass, methacrylate or polycarbonate, 3M^{TM} Radiant Light Film association with glass, methacrylate or polycarbonate.

The transparent surfaces comprised of or comprising 3M^{TM} Radiant Color Film provide a polychromatic lighting, particularly for indoor or outdoor decoration lighting, whose color depends on the angle of incidence onto the film.

The essentially transparent surfaces may have the function of light input surfaces, particularly they are intended for being coupled to a light source, directly or through a light guide or a light guide lamp, or they may have the function of concentrated (i.e., not diffused) light output, particularly they are intended for being coupled to a light guide or light guide lamp.

An essentially transparent surface may also be coupled to a light guide or light guide lamp at which other end a light source is provided, and function as a light input or light output surface, depending on whether the light source is emitting light or not.

The essentially externally diffusing and internally reflecting surfaces, if present, may be comprised of or comprise a TIR film, preferably an OLF film, preferably oriented with its side provided with micro-prisms outwardly of the polyhedron.

The TIR film may be selected among 3M^{TM} Optical Lighting Film 2301, and 3M^{TM} Optical Lighting Film 2301 in association with 3M^{TM} Radiant Color Film or 3M^{TM} Radiant Light Film.

The essentially externally diffusing and internally reflecting surfaces may have the function of diffused light output surfaces for lightening the surrounding environment.

Moreover, the essentially externally diffusing and internally reflecting surfaces have the function of conveying the light rays incident on them toward the adjacent surfaces, to cause the desired path of the light rays toward the light output surface(s).

The essentially internally diffusing surfaces, if present, are comprised of or comprise a TIR film, preferably an OLF film, preferably oriented with its side provided with micro-prisms inwardly of the polyhedron.

The TIR film may be selected among 3M^{TM} Optical Lighting Film 2301, and 3M^{TM} Optical Lighting Film 2301 in association with 3M^{TM} Radiant Color Film or 3M^{TM} Radiant Light Film.

The essentially internally diffusing surfaces have the function of light, particularly of natural or artificial diffused light, input surfaces.

The essentially internally reflecting surfaces may be made of or internally coated with a highly reflecting material selected among a mirror surface, an optical VIKUITI High Reflectivity Visible Mirror Film, a TIR film, preferably 3M^{TM} Optical Lighting Film 2301 preferably oriented with the micro-prisms towards the inner of the optical device.

The said materials, particularly the 3M^{TM} Optical Lighting Film 2301, may in particular be applied as an internal coating of a surface such as, for example, mutt, to produce a low luminance.

The essentially internally reflecting surfaces have the function of conveying the light rays incident on them toward the adjacent surfaces, to cause the desired path of the light rays toward the light output surface(s).

The essentially opaque surfaces may be made of any opaque material, such as aluminum, plastics, etceteras.

The essentially opaque surfaces absorb the light rays incident on them, and are therefore preferably limited to minor surfaces of said plurality of surfaces.

The at least a light output surface is selected in the group comprised of an essentially transparent surface and an essentially externally diffusing and internally reflecting surface.

Moreover, the at least a light input surface is selected in the group comprised of an essentially transparent surface, an essentially internally diffusing surface, an essentially opaque surface coupled to an artificial light source internal to the optical device, and an essentially internally reflecting surface coupled to an artificial light source internal to the optical device.

Such a light source internal to the optical device may be of any kind, such as for example a fluorescent lamp, a discharge lamp, an incandescent lamp, etceteras, or also it may be comprised in turn of a light guide lamp, for example it may be comprised of TIR film, particularly 3M^{TM} Optical Lighting Film 2301 tube, arranged along said light input surface, there being a light source at a first end of the tube.

In some embodiments, the optical device has at least one light input essentially transparent surface and at least a light output essentially externally diffusing and internally reflecting surface. Preferably, at least one of the remaining surfaces is essentially internally reflecting. Such an optical device embodies an illuminator or light fluxes distributor.

In some embodiments, the optical device has at least a light input essentially internally diffusing surface and a light output essentially transparent surface. Preferably, at least one of the remaining surfaces is essentially internally reflecting. Such an optical device embodies a diffused, natural or artificial light collector.

In other embodiments, the optical device has a light input essentially transparent surface and a light output essentially transparent surface, at least one of the remaining surfaces being essentially internally reflecting. Such an optical device embodies a light flux deflector.

When at least an essentially externally diffusing and internally reflecting surface is also present, such an optical device embodies a light flux deflector combined with an illuminator.

In other embodiments, the optical device has a light input or respectively output essentially transparent surface and at least two light output or respectively input essentially transparent surfaces, at least one of the remaining surfaces being essentially internally reflecting. Such an optical device embodies a light fluxes splitter or, respectively, a light fluxes merger.

When an essentially externally diffusing and internally reflecting surface is also present, such an optical device embodies a light flux splitter or merger combined with an illuminator.

The polyhedron having the shape of the invention may be thought of as a regular tetrahedron of which the four vertexes and the four edges were cut away.

Any light input or respectively output essentially transparent surfaces are preferably selected among said quadrangular surfaces.

More particularly, in first embodiments said surfaces having a quadrangular shape are of a rectangular shape and said eight surfaces having the shape of an equilateral triangle comprise four major triangular surfaces and four minor triangular surfaces, the sides of each major triangular surface being each adjacent to a major side of a respective rectangular surface, the sides of each minor triangular surface being each adjacent to a minor side of a respective rectangular surface, and the vertexes of each major triangular surface being each adjacent to a vertex of a respective minor triangular surface.

In second embodiments, said surfaces having a quadrangular shape are of a square shape and said eight surfaces having the shape of an equilateral triangle are equal to each other, the sides of each triangular surface being each adjacent to a side of a respective square surface, and pairs of vertexes of triangular surfaces being adjacent to each other.

The invention further relates to an optical system comprising at least an optical device as described and at least a light guide or light guide lamp associated to a respective essentially transparent surface of the optical device.

The invention further relates to an optical system comprising at least two optical devices as described, a surface of a first optical device being optically coupled to a surface of a second optical device.

The coupled surfaces of the optical devices may coincide, be coupled by direct contact, be coupled through a light guide and/or be coupled through a light guide lamp.

In particularly advantageous embodiments of the optical system, said first optical device is a light collector and said second optical device is selected in the group comprised of an illuminator, a light beam deflector, a light beam deflector and illuminator, a light beam splitter, and a light beam splitter and illuminator.

In an embodiment, the system comprises two optical devices having the first polyhedron shape described above, said pairs of optically coupled surfaces comprising one of the major triangular surfaces of the first optical device and one of the minor triangular surfaces of the second optical device, the first optical device being an illuminator having three light input surfaces and the second optical device being a splitter into three light fluxes arranged internally of the first optical device and coupled to three light guide lamps at the three light input surfaces of the first optical device.

Characteristics and advantages of the invention will now be shown with reference to embodiments represented by way of a non limiting example in the attached drawings, wherein:
- Fig. 1 shows a perspective view of the shape of first embodiments of an optical device according to the present invention,
- Fig. 2 shows a plane layout of the optical device of Figure 1,
- Figure 3 shows a perspective view of a frame of the optical device of Figure 1,
- Figures 4a and 4b together show, in a plane layout respectively from the external side (Fig. 4a) and from the internal side (Fig. 4b), the nature of the surfaces of the optical device of Figure 1 in an embodiment,
- Figures 5a, 5b to 13a, 13b are analogous to Figures 4a and 4b, but relating to other embodiments,
- Figures 14 to 20 diagrammatically show some optical functions achievable through the various embodiments of the optical device of the present invention,
- Figures 21 to 23 diagrammatically show some ways of coupling a first and a second optical device according to the present invention to obtain an optical system,
- Figures 24 to 26 diagrammatically show some practical applications of optical devices and optical systems according to the present invention,
- Fig. 27 shows a perspective view of the shape of second embodiments of an optical device according to the present invention, and
- Fig. 28 show a plane layout of the optical device of Figure 27.

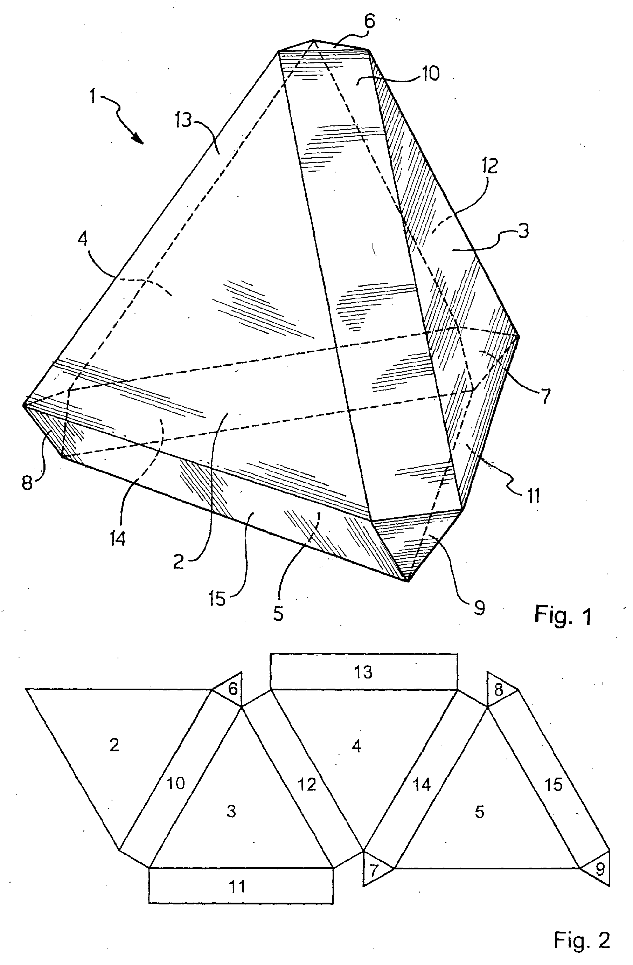

In Figures 1 and 2 is shown, in perspective and respectively plane layout view, the shape of an optical device 1 according to first embodiments of the present invention.

The optical device 1 comprises a plurality of surfaces arranged according to the external surface of a polyhedron.

The optical device 1 has the shape of an irregular polyhedron having fourteen sides.

The irregular polyhedron may be thought as obtained from a regular tetrahedron, that is to say from a regular pyramid having a triangular base, from which the four vertexes and the four edges were cut away.

More particularly, the irregular polyhedron comprising the optical device 1 comprises eight surfaces 2-9 having the shape of an equilateral triangle, among which four major triangular surfaces (sides) 2-5 and four minor triangular surfaces (vertexes) 6-9, as well as six surfaces having a rectangular shape (edges) 10-15.

The sides of each major triangular surface 2-5 are each adjacent to a major side of a respective rectangular surface 10-15, for example the sides of major triangular surface 2 and the major sides of the rectangular surfaces 10, 13, 15 contact each other.

The sides of each minor triangular surface 6-9 are each adjacent to a minor side of a respective rectangular surface 10-15, for example the sides of minor triangular surface 6 and the minor sides of the rectangular surfaces 10, 12, 13 contact each other.

The vertexes of each major triangular surface 2-5 are each adjacent to a vertex of a respective minor triangular surface 6-9, for example the vertexes of major triangular surface 2 and the vertexes of minor triangular surfaces 6, 8, 9 contact each other.

According to the invention it is possible to make each surface 2-15 of the polyhedron of the optical device 1 in a different material or in a different material combination.

In the practice of the invention, the various material or combinations thereof shown below for the plurality of surfaces 2-15 may comprise altogether the optical device 1.

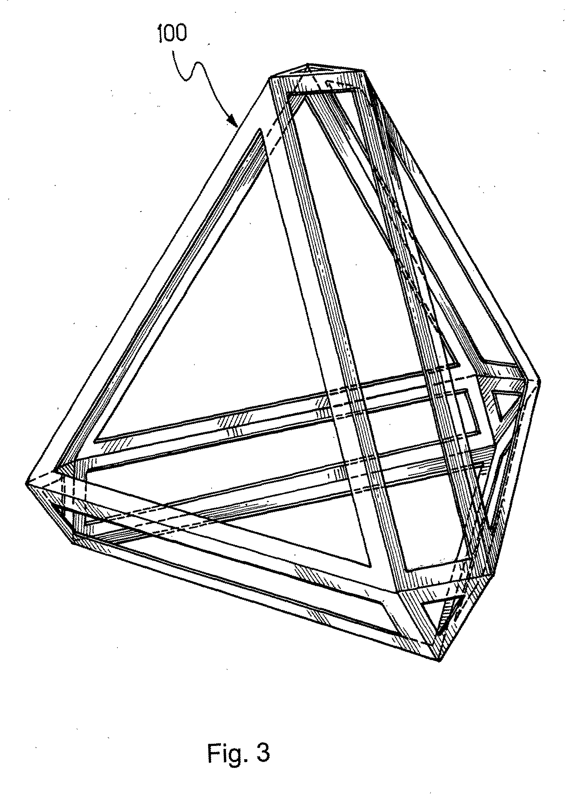

Alternatively there may be a frame 100, for example as diagrammatically shown in Figure 3, made of a suitable stiff material, for example aluminum, plastics, etceteras, possibly colored, for supporting said materials or combinations thereof, which will preferably be applied internally of frame 100 or, in the case of a material combination, both internally and externally.

The material of frame 100 may comprise the edges between pairs of adjacent surfaces 2-15 only, as shown in Figure 3, or also those surfaces, possibly provided, which are opaque or internally reflecting and externally opaque.

Frame 100 may also be made as a single-piece or it may be unmountable or hinged at one or more of the edges of the polyhedron so as to be unfoldable in a plane, for example for transportation and stocking.

The optical nature of each of surfaces 2-15 may be selected among:
- essentially transparent: particularly such a surface may be "virtual", that is to say without material at all, or made of a highly transparent material, such as glass, methacrylate, polycarbonate, 3M^{TM} Radiant Color Film, 3M^{TM} Radiant Light Film, 3M^{TM} Radiant Color Film in association with glass, methacrylate or polycarbonate, 3M^{TM} Radiant Light Film in association with glass, methacrylate or polycarbonate, wherein the transparent surfaces comprised of or comprising 3M^{TM} Radiant Color Film provide a polychromatic lighting, particularly for indoor or outdoor decoration lighting, because such a film has the effect that the color of the transmitted light depends on the angle of incidence of the light onto the film, and on the angle at which the film is seen;
- essentially externally diffusing and internally reflecting: particularly such a surface may be comprised of or comprise a TIR film, preferably a OLF film oriented with its side provided with micro-prisms externally of the polyhedron. The TIR film is for example selected among 3M^{TM} Optical Lighting Film 2301, and 3M^{TM} Optical Lighting Film 2301 in association with 3M^{TM} Radiant Color Film or 3M^{TM} Radiant Light Film;
- essentially internally diffusing: particularly such a surface may be made using the same materials listed above for the essentially externally diffusing and internally reflecting surfaces, wherein the TIR film is however preferably oriented with its side provided with micro-prisms internally of the polyhedron;
- essentially internally reflecting: particularly such a surface may be made of or internally coated with a highly reflecting material, such as a mirror surface, a VIKUITI High Reflectivity Visible Mirror Film, a TIR film, preferably 3M^{TM} Optical Lighting Film 2301 oriented with the micro-prisms facing toward the internal of the optical device. Said materials, particularly the 3M^{TM} Optical Lighting Film 2301, may particularly be applied as an internal coating of a surface such as, for example, mutt, to provide a low luminance;
- essentially opaque: such a surface may be made in any opaque material, such as aluminum, plastics, and particularly, as mentioned above, it may be a part of frame 100.

In all embodiments of the optical device 1 of the present invention, the essentially transparent surfaces may have different functions.

A first function is that of light input surfaces, through coupling with a light source, directly or through a light guide or light guide lamp, preferably of the total internal reflection (TIR) film type, more preferably 3M^{TM} Optical Lighting Film 2301.

A second function is that of non-diffused light output, through coupling with a light guide or light guide lamp, preferably of the total internal reflection (TIR) film type, more preferably 3M^{TM} Optical Lighting Film 2301.

In a third function thereof, an essentially, transparent surface may be coupled with a light guide or light guide lamp, again preferably of the total internal reflection (TIR) film, more preferably OLF, type, to which other end a natural or artificial light source is provided. In such a case, as better explained below, such essentially transparent surface functions as a light input or light output surface depending on whether the light source at the end of the light guide or light guide lamp emits light or not.

The essentially externally diffusing and internally reflecting surfaces have the function of diffused light output surfaces for lightening the surrounding environment.

Moreover, the essentially externally diffusing and internally reflecting surfaces have the function of conveying the light rays incident on them toward the adjacent surfaces, to cause the desired path of the light rays toward the light output surface(s).

The essentially internally diffusing surfaces have the function of light input surfaces, particularly diffused natural or artificial light.

For light input, alternatively to an essentially transparent or essentially internally diffusing surface, an artificial light source internal to the optical device may be provided, at an opaque or reflecting surface, or also more artificial light sources.

The essentially internally reflecting surfaces have the function of conveying the light rays incident on them toward the adjacent surfaces, to cause the desired path of the light rays internally of the optical device 1 towards one or more light output surfaces, made as essentially externally diffusing and internally reflecting surfaces or as essentially transparent surfaces.

The essentially opaque surfaces absorb the light rays incident on them, and therefore are preferably limited to minor surfaces of said plurality of surfaces.

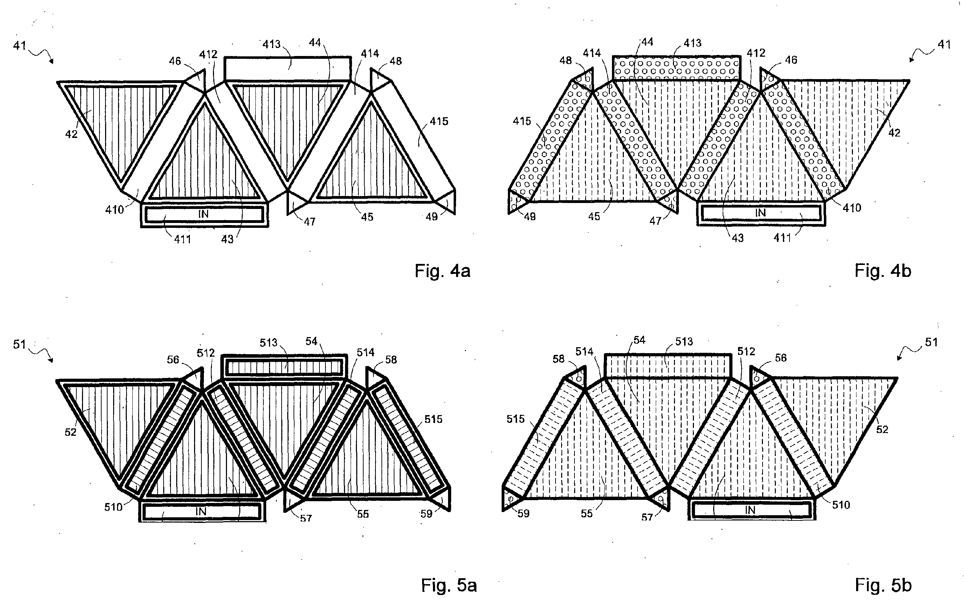

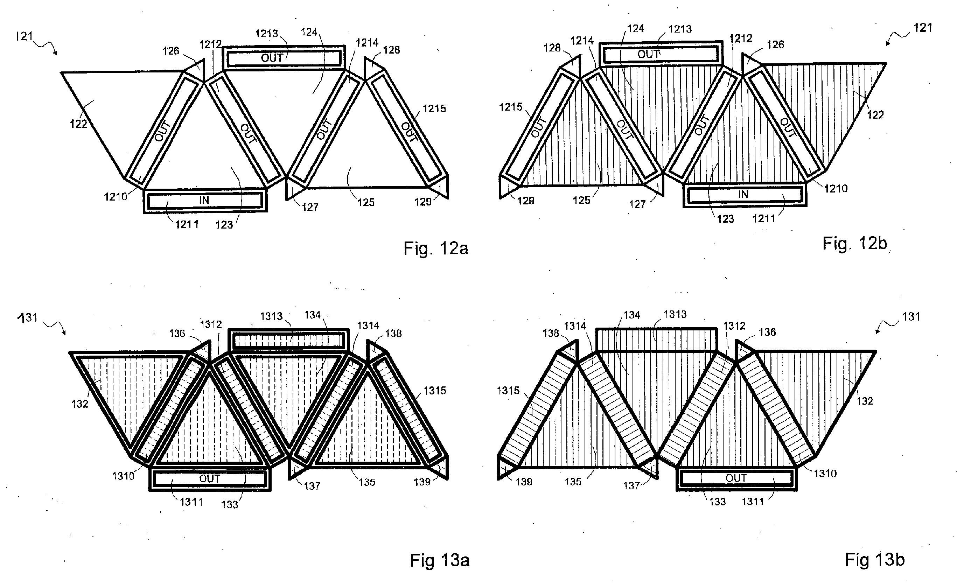

In the following, only some among the various combinations of optical nature of the surfaces of the optical device 1 are described, with reference to Figures 4a,4b to 13a,13b. Said figures show the plane layout of the optical device, from the external side (Figures "a") and, respectively, from the internal side (Figures "b"). In said figures, the optical devices and the various surfaces are indicated by a number comprised of the figure number and of number 1 or the number of the corresponding surface in Figure 2.

Figures 4a and 4b show an embodiment of optical device 1 of Figures 1 and 2, indicated by 41, wherein the four major triangular surfaces 42-45 are essentially externally diffusing and internally reflecting, the four minor triangular surfaces 46-49 and five of the rectangular surfaces 410,412-415 are essentially internally reflecting and externally opaque, while the rectangular surface 411 is a light input surface.

More particularly, the four major triangular surfaces 42-45 are essentially externally diffusing and internally reflecting surfaces, particularly made by 3M^{TM} Optical Lighting Film 2301 oriented with the side provided with micro-prism -indicated by a solid-line hatch in Figure 4a and in the successive Figures- toward the exterior and the smooth side -indicated by a dotted hatch in Figure 4b and in the successive Figures- toward the interior of the optical device 41.

The four minor triangular surfaces 46-49 and the five rectangular surfaces 410,412-415 are essentially reflecting surfaces, particularly made of a VIKUITI High Reflectivity Visible Mirror Film on the internal side of the optical device 41 -indicated by circles in Fig. 4b and in the successive figures-, applied to an opaque material or, for example, mutt, to the external side of the optical device 41 -indicated by the absence of hatch in Fig. 4a and in the successive Figures-.

The rectangular surface 411 is indicated with the label "IN" in figures 4a and 4b and in the successive figures with reference to its light input function.

Particularly, said rectangular surface 411 may be an essentially transparent surface, including a surface free of material ("virtual" surface), coupled to a light guide or light guide lamp, preferably of the total internal reflection (TIR) film type, more preferably OLF, suitably deformed into an ovoid at the coupling end with the rectangular surface 411. At the other end of the light guide or light guide lamp, the light of an artificial light source, or also of a natural light source, may be provided or brought. The rectangular surface 411 may also be made of or coated with the above-mentioned 3M^{TM} Radiant Color Film.

Alternatively, a suitable elongated light source may be arranged at said rectangular surface 411, externally or preferably internally of the optical device 1.

The light source may be for example comprised of one or more fluorescent, discharge, incandescent lamps, etceteras.

In an advantageous alternative, especially when the size of the optical device 41 render unpractical or impossible the use of lamps of the above kind, the light source may be comprised of a light guide lamp, preferably of the TIR, particularly OLF, film type.

In the embodiment of optical device 41 of Figures 4a and 4b, the light entering or created within the optical device 41 at the light input rectangular surface 411 exits from the major triangular surfaces 42-45 or is internally reflected according to the angle of incidence, and is internally reflected when is incident on the remaining surfaces 46-410 and 412-415.

The light exiting the major triangular surfaces 42-45 is diffused light into the surrounding environment. Altogether, the embodiment of optical device 41 according to Figures 4a and 4b therefore functions as a light fluxes diffuser or, more simply, as an illuminator. Practical applications of such an illuminator will be later described.

The embodiment of optical device shown in Figures 5a and 5b, indicated by 51, differs from that shown in Figures 4a and 4b in that the five rectangular surfaces 510,512-515 other than the light input surface 511 are also made as light output essentially externally diffusing and internally reflecting surfaces.

More particularly, like the major triangular surfaces 52-55, the rectangular surfaces 510,512-515 are made of 3M^{TM} Optical Lighting Film 2301 oriented with the side provided with the micro-prisms toward the exterior and the smooth side toward the interior of the optical device 51.

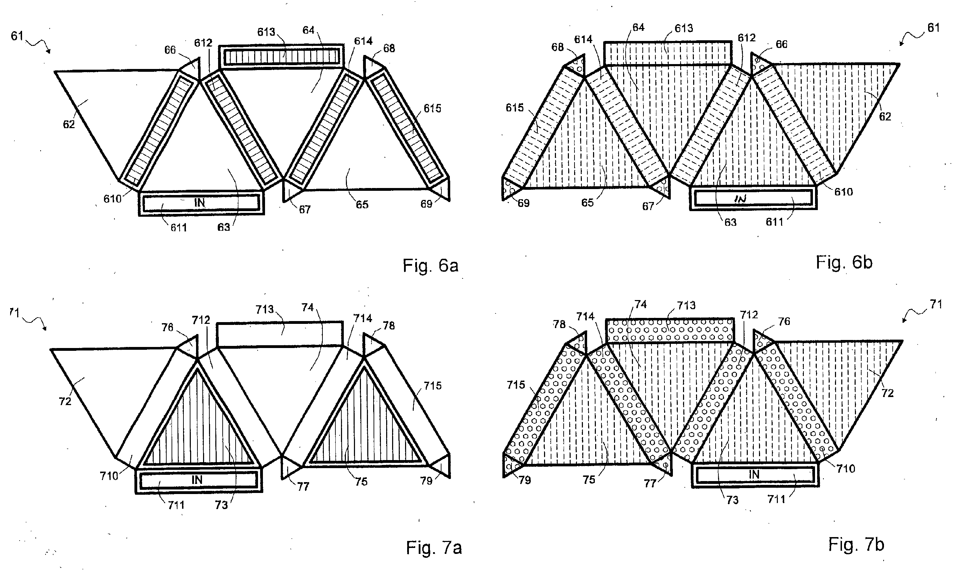

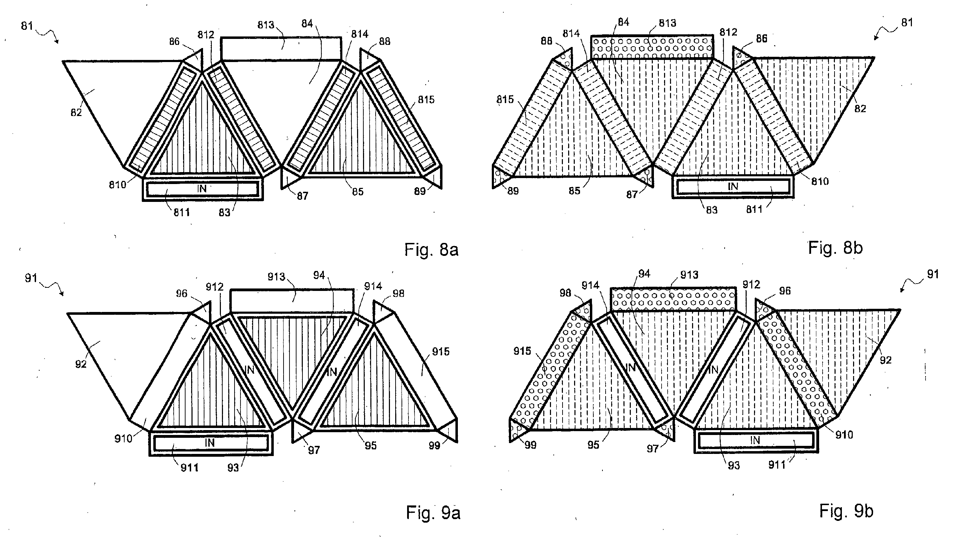

Also the embodiment of the optical device 51 according Figures 5a and 5b is therefore useful as a light fluxes diffuser or illuminator, as are the successive embodiments of Figures 6a,6b to 9a,9b.

In the embodiment of optical device shown in Figures 6a and 6b, indicated by 61, one of the rectangular surfaces 611 is a light input surface, made in one of the manners described with reference to the rectangular surface 411 of the embodiment of Figures 4a,4b. The remaining rectangular surfaces 610,612-615 are essentially externally diffusing and internally reflecting surfaces, particularly made by 3M^{TM} Optical Lighting Film 2301, oriented with the side provided with micro-prisms toward the exterior of optical device 1 and the smooth side toward the interior.

The four major triangular surfaces 62-65 are essentially internally reflecting surfaces, particularly made by 3M^{TM} Optical Lighting Film 2301, oriented with the smooth side toward the interior of optical device 61, and an opaque surface or mutt on the external side with respect to the optical device 61. Alternatively, the four major triangular surfaces 62-65 may be made of the above mentioned VIKUITI High Reflectivity Visible Mirror Film.

The minor triangular surfaces 66-69 are also essentially internally reflecting surfaces, made analogously to the corresponding surfaces 46-49 of the embodiment of Figures 4a,4b.

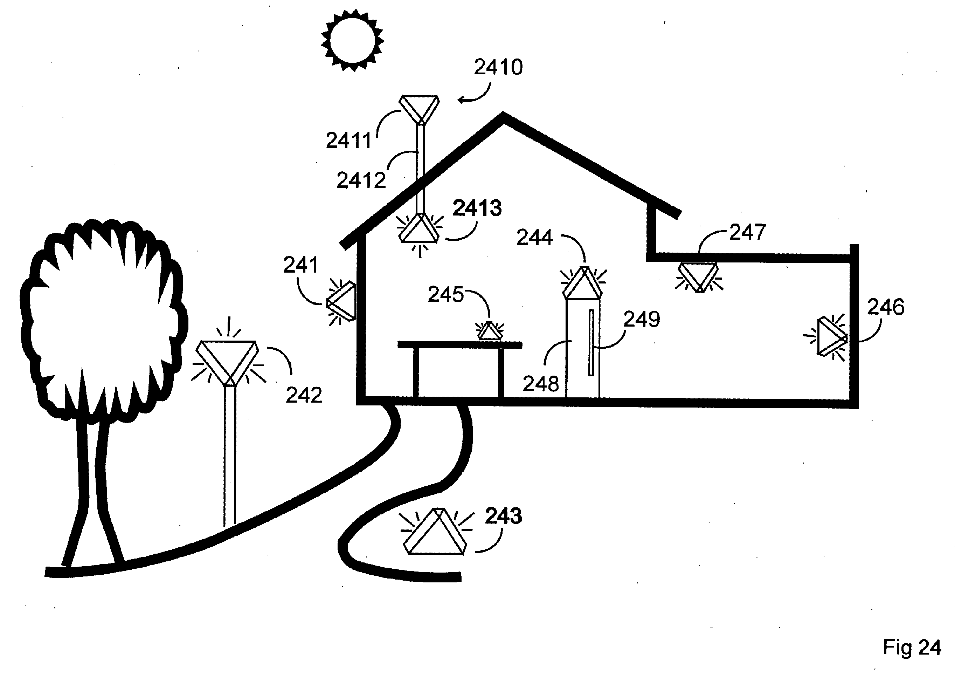

The illuminator optical devices 41, 51, 61 of Figures 4a,4b to 6a,6b are useful, for example, as indoor or outdoor lighting and/or decorating lamps. Figure 24, later described, diagrammatically shows some of such lamps.

The embodiment of optical device shown in Figures 7a and 7b, indicated by 71, differs from that shown in Figures 4a and 4b in that only two of the major triangular surfaces, particularly the two surfaces 73 and 75 adjacent to the major sides of the rectangular light input surface 711, are essentially externally diffusing and internally reflecting surfaces.

The two remaining major triangular surfaces 72 and 74 are essentially internally reflecting surfaces, particularly made by 3M^{TM} Optical Lighting Film 2301, oriented with the smooth side toward the interior of optical device 71, and an opaque surface or mutt on the external side with respect to the optical device 71. Alternatively, the major triangular surfaces 72 and 74 may be made of the above-mentioned VIKUITI High Reflectivity Visible Mirror Film.

The embodiment of optical device shown in Figures 8a,8b, indicated by 81, differs from that shown in Figures 7a, 7b in that the four rectangular surfaces 810,812, 814 and 815 other than the rectangular surface 813 in front of light input surface 811 are also essentially externally diffusing and internally reflecting surfaces, particularly made by 3M^{TM} Optical Lighting Film 2301, oriented with the side provided with micro-prisms toward the exterior of optical device 81 and the smooth side toward the interior.

The illuminator optical devices 71, 81 of the embodiments of Figures 7a,7b and 8a,8b diffuse the light (Fig. 7a, 7b) or most of the light (Fig. 8a,8b) through the major triangular surfaces 73,75 and 83,85, along two directions (intended as the directions of the perpendicular axes to the major triangular surfaces 73,75 and 83,85) diverging and at an angle which is essentially of 120° (more precisely, said directions form an angle of 35° with the plane of surface 72,82 and the projections of said directions in the plane of surface 72,82 form an angle of 120°).

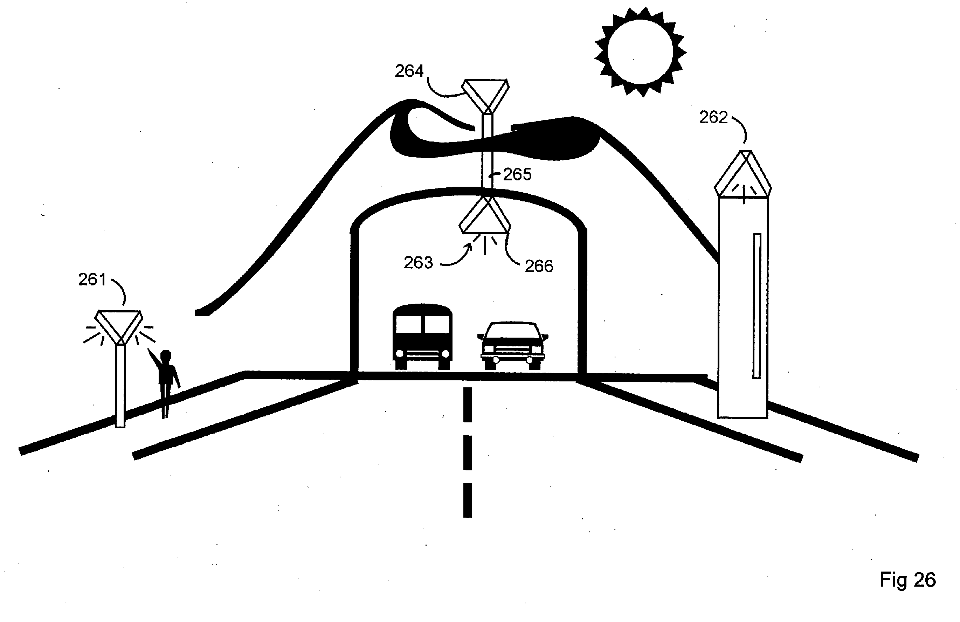

They are therefore particularly useful as illuminators for sidewalks, as diagrammatically shown in Figure 26, later described.

In the embodiment of optical device shown in Figures 9a and 9b, indicated by 91, three of the four major triangular surfaces 93-95 are essentially externally diffusing and internally reflecting, being particularly made by 3M^{TM} Optical Lighting Film 2301, oriented with the side provided with micro-prisms toward the exterior of optical device 91. The fourth major triangular surface 92 is essentially internally reflecting, particularly made by 3M^{TM} Optical Lighting Film 2301, again oriented with the side provided with micro-prisms toward the exterior of optical device 91, but with an opaque surface or mutt on the external side.

Three rectangular surfaces 911,912,914 are light input surfaces.

The four minor triangular surfaces 96-99, as the three rectangular surfaces 910,913,915 diverse other than the light input surfaces 911,912,914, are essentially internally reflecting surfaces, particularly made by a mirror surface or a VIKUITI High Reflectivity Visible Mirror Film coupled with an opaque surface on the external side of optical device 91.

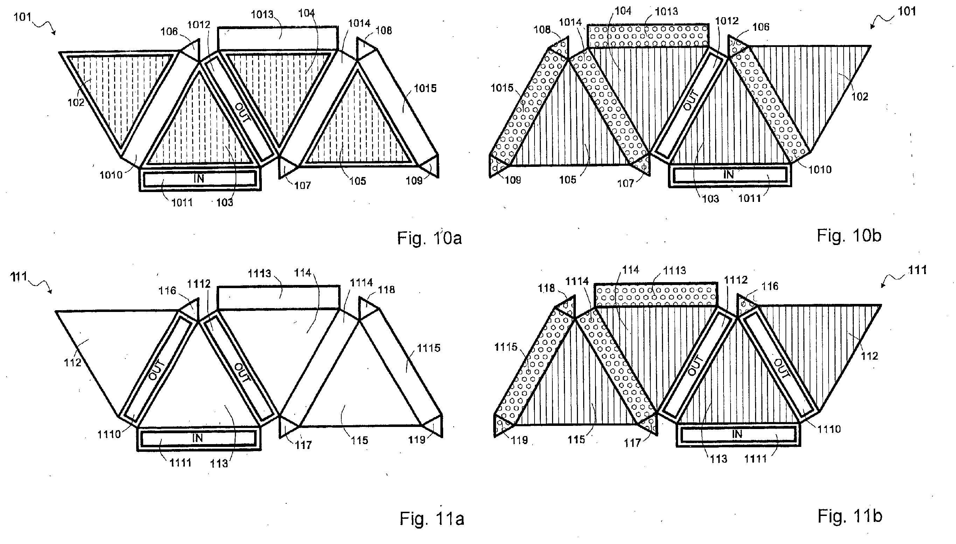

In a particularly advantageous embodiment, the minor triangular surface 97 adjacent to all three light input surfaces 911,912,914, that is to say that opposed to the essentially internally reflecting major triangular surface 92, is a light input surface, and three internal light guide lamps are provided, arranged at the light input surfaces 911,912,914. Particularly, for distributing the light from the light input minor triangular surface 97 to the three internal light guide lamps, an optical device of smaller size (not shown) may be provided for, acting as a flux splitter as later described with reference to Figures 11 and 12.

The embodiment of optical device 91 shown in Figures 9a,9b is particularly useful as indoor floor lamp or outdoor pole.

In the embodiment of optical device shown in Figures 10a and 10b, indicated by 101, the four major triangular surfaces 102-105 are essentially externally diffusing and internally reflecting, particularly being made of 3M^{TM} Optical Lighting Film 2301, oriented with the side provided with micro-prisms toward the interior of optical device 101. The four minor triangular surfaces 106-109 and four rectangular surfaces 1010,1013-1015 are essentially internally reflecting, particularly made by a mirror surface or a VIKUITI High Reflectivity Visible Mirror Film coupled with an opaque surface or mutt on the external side of optical device 101.

The remaining two rectangular surfaces 1011,1012 are essentially transparent surfaces, acting one, 1011, as light input surface and the other, 1012, indicated by the label "OUT", as light output surface.

The angle between the two rectangular surfaces 1011,1012 may be considered of 120°, so that the light, conveyed to the optical device 101 for example by a light guide or light guide lamp, is deflected by such an angle.

The embodiment of Figures 10a,10b thus allows to embody a light flux deflector.

Simultaneously, due to the essentially externally diffusing and internally reflecting nature of the four major triangular surfaces 102-105, this embodiment embodies an illuminator.

Alternatively, the light input and output rectangular surfaces may be selected so as not to be adjacent to a same major triangular surface, such as, for example, surfaces 1011 and 1013. In such a manner, the light is essentially not deflected, however two light guide spans may for example be joined to each other.

The embodiment of optical device shown in Figures 11a,11b, indicated by 111, differs from that shown in Figures 10a,10b in that there are three essentially transparent rectangular surfaces 1110-1112, and in that the major triangular surfaces 112-115 are essentially internally reflecting, for example made by an OLF film oriented with the side provided with micro-prisms toward the interior of optical device 111 and an opaque surface on the external side of optical device 111.

Using one of the three essentially transparent rectangular surfaces as a light input surface 1111 and the two remaining essentially transparent rectangular surfaces 1110,1112 as light output surfaces, the optical device 111 is useful as a non-diffused light flux splitter, in two directions each forming an angle essentially of 120° with the light input surface 1111 and with each other.

Conversely, using two essentially transparent rectangular surfaces as light input surfaces and the remaining essentially transparent rectangular surface as a light output surface, the optical device 1 is useful as a flux merger of non-diffused light coming from different directions.

Alternatively, the three light input and output essentially transparent rectangular surfaces may be selected so as not to be all three adjacent to a same major triangular surface, such as, for example, surfaces 1011, 1012 and 1013, or so as to be all three adjacent to a same minor triangular surface, such as, for example, surfaces 1011,1012,1014.

The number of the light output surfaces in the case of light flux splitter or respectively the number of light input surfaces in the case of light flux merger is not however limited to two, rather it may be comprised between two and five.

By way of an example, in the embodiment shown in Figures 12a,12b, which for the rest is identical with that shown in Figures 11a,11b, all six rectangular surfaces 1210-1215 of the optical device indicated by 121 are essentially transparent, intended for acting one, 1211, as a light input surface and five, 1210,1212-1215 as light output surfaces, or vice-versa.

When there are three or four light input or respectively output surfaces, their mutual position and their position with respect to the light output or respectively input surface may be suitably selected as a function of the desired deflection angles for each specific application.

The major triangular surfaces 12-15 may also be essentially externally diffusing and internally reflecting surfaces as in the case of the embodiment of Figures 10a,10b or essentially internally reflecting as in the case of the embodiment of Figures 11a,11b, or also they may be one or some essentially externally diffusing and internally reflecting and one or some essentially internally reflecting, as a function of the application each time desired. Of course, the more the essentially externally diffusing and internally reflecting surfaces are, the less the amount of non-diffused light exiting the light output surface or surfaces will be.

In the embodiment of optical device shown in Figures 13a,13b, indicated by 131, the rectangular surface 1311 is an essentially transparent light output surface, while all surfaces 132-1310, 1312-1315 are essentially internally diffusing, particularly made by 3M^{TM} Optical Lighting Film 2301, oriented with the side provided with micro-prisms toward the interior.

In the embodiment of optical device 131 of Figures 13a and 13b, the light surrounding the device 131, be it artificial or natural, is collected within the same optical device 131 and conveyed toward the light output surface 1311.

The rectangular light output surface 1311 is preferably coupled with a light guide, preferably of the total internal reflection (TIR) film, more preferably OLF, type.

The optical device 131 of the embodiment of Figures 13a,13b is therefore particularly useful as diffused light collector. In a particularly useful application, such a collector is intended to be placed externally to a closed construction, such as on the roof or on an external wall of a building, so as to capture the natural light and transport it, through the light guide coupled to the light output surface 1311, to the interior of the same building.

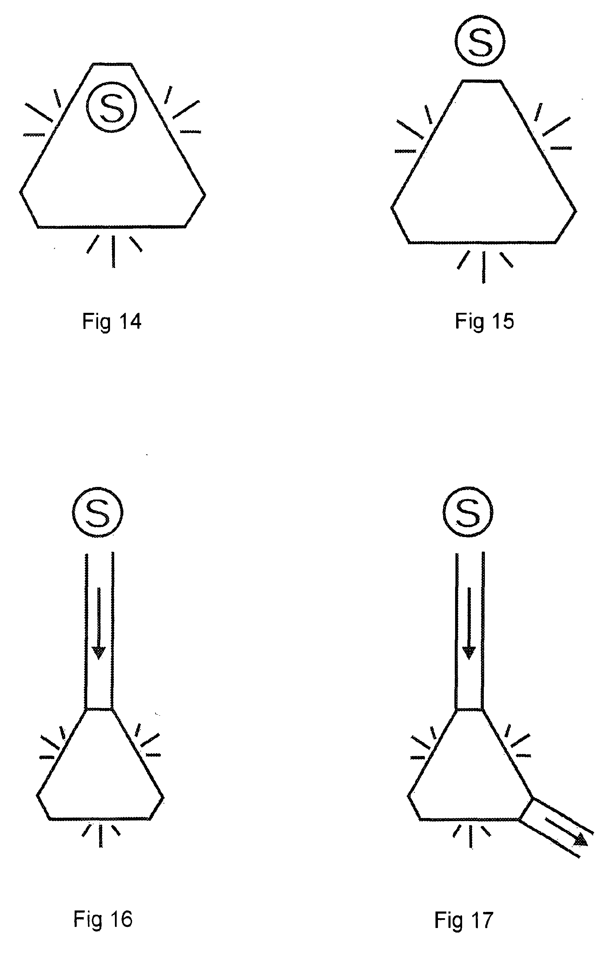

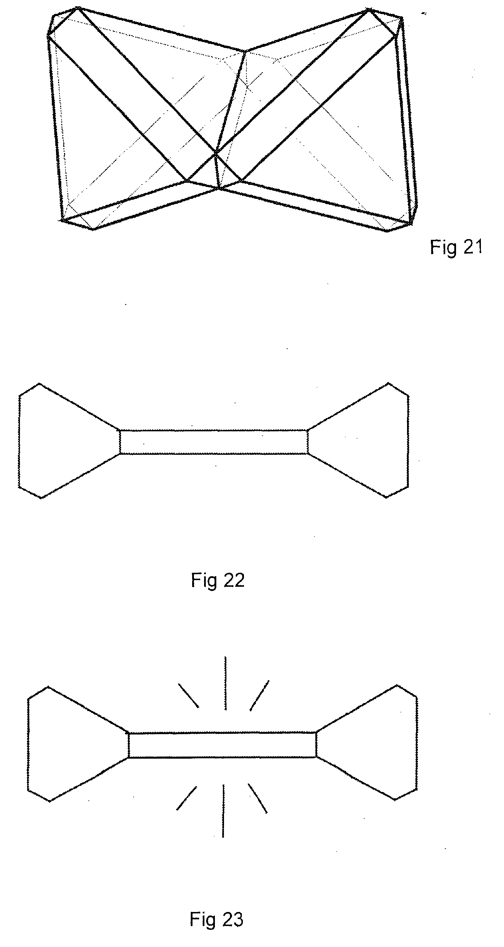

As said above, the various embodiments described above, and also others which may be obtained by changing the nature of the various surfaces 2-15 of the optical device 1, allow to embody several optical functions, outlined in Figures 14 to 20. In Figures 14 to 20 and in the following Figures 21-26, the light sources are outlined with an S letter enclosed by a circle, the diffused light emission is indicated by radial lines and the light path within the light guides or light guide lamps is indicated by arrows.

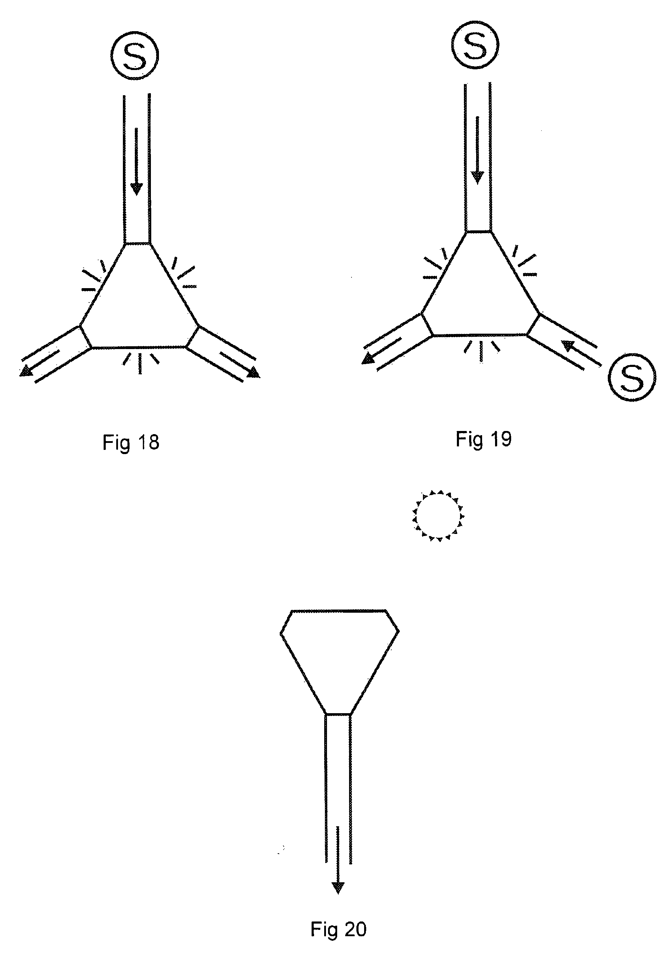

The optical functions that may be embodied with the optical device 1 according to the invention may be grouped as follows:
- illuminator or light flux distributor, when the optical device 1 comprises at least a light input surface and one or more essentially externally diffusing and internally reflecting light output surfaces. The light source may be arranged internally (Fig. 14) or externally (Fig. 15) of the device, also remote therefrom and coupled therewith through a light guide or light guide lamp (Fig. 16); apart from when it is internal to the optical device, the light source may be natural or artificial;
- light flux deflector, when the optical device 1 comprises an essentially transparent non-diffused light input surface, particularly for light guided by a light guide or light guide lamp, and an essentially transparent non-diffused light output surface (Fig. 17), particularly for light guided by a light guide or light guide lamp;
- light flux splitter, when the optical device 1 comprises an essentially transparent non-diffused light input surface, particularly for light guided by a light guide or light guide lamp, and at least two essentially transparent non-diffused light output surfaces, particularly for light guided by a light guide or light guide lamp (Fig. 18);
- light flux merger, when the optical device 1 comprises more essentially transparent non-diffused light input surfaces, particularly for light guided by a light guide or light guide lamp, and an essentially transparent non-diffused light output surface, particularly for light guided by a light guide or light guide lamp (Fig. 19);
- diffused light collector, when the optical device 1 comprises one or more essentially internally diffusing light input surfaces for the diffused light of the surrounding environment, particularly for natural light, and an essentially transparent non-diffused light output surface, particularly for light guided by a light guide or light guide lamp (Fig. 20).

Besides the light deviator, splitter or merger function, the optical device 1 may simultaneously accomplish the function of light diffuser or illuminator if, besides the light input and output surfaces indicated above for the various functions, it comprises one or more light output essentially externally diffusing and internally reflecting surface(s). This is shown in Figures 14-19 by radial lines.

By combining with one another two or more optical devices 1 having the functions indicated above, optically coupling an essentially transparent surface of an optical device 1 with an essentially transparent surface of a second device directly (Fig. 21), through light guides (Fig. 22), or through light guide lamps (Fig. 23), complex optical systems with various functions may be made, some of which are later described.

In the above described applications, the angles that may be formed between the entering light and the exiting light at each optical device may be considered multiples of 120°.

Merely by way of an example, Figures 24-26 show some applications of optical device 1 according to the invention, and of particularly interesting optical systems obtainable with it.

In Figure 24 some outdoor or garden lamps are diagrammatically shown, such as a wall lamp 241, a pole 242, a garden lamp 243, and corresponding indoor lamps, for lightening and/or decoration, such as a floor lamp 244, a table lamp 245, a wall lamp 246, a ceiling lamp 247. Particularly, a light guide 248 is embodied in the upright of the floor lamp 244, a slit 249 being made in the light guide 248 to provide a light blade along the upright itself.

In the same Figure 24, a system 2410 for exploiting the sunlight is further shown, comprising an optical device 2411 made as light collector, placed on the building roof (analogously, it could be placed on a building side), connected through a light guide 2412 to a second optical device 2413 made as light flux diffuser and arranged internally of the building.

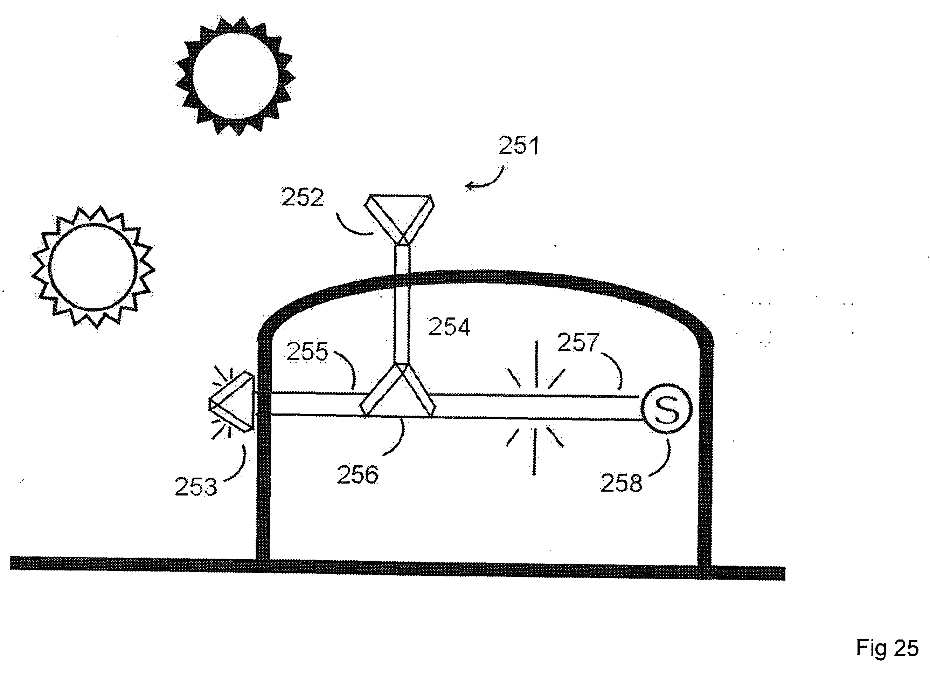

In Figure 25 a system 251 for exploiting the sunlight is shown, comprising two optical devices 252,253 made as light collectors, one arranged on the roof and one on the side of the building. The two optical devices 252,253 are connected, through a respective light guide 254,255, to a third optical device 256, made as light flux merger. The third optical device 256 is connected to the first end of a light guide lamp 257. The light guide lamp 257 is further connected, at its second end, to an artificial light source 258. As long as at least one of the first and the second optical device 252, 253 receives the sunlight, the light source 258 may be switched off and the light guide lamp 257 lightens the environment with the light received from the third optical device 256. In bad weather days or at nighttime, the light source 258 may be turned on to lighten the light guide lamp 257, while the three optical devices 252,253,256 remain essentially inactive.

The second end of the light guide lamp 257 could in turn be coupled to a fourth optical device according to the invention (not shown) enclosing the light source 258, or it could be made as a merger of light fluxes between the light source 258 and the light coming from a further optical device according to the invention (not shown), made as a light collector.

Figure 26 shows some applications of optical device 1 according to the invention for road lighting. Two illuminators as sidewalk lamp 261, 262 are shown, as well as a system 263 for tunnel lighting exploiting also the natural light analogously to the systems 2410 and 251 described with reference to Figures 24 and 25.

The system 263 for tunnel lighting provides, more particularly, an optical device 264 made as a light collector, arranged externally of the tunnel, connected through a light guide 265 to a second optical device 266 made as a light flux diffuser, hanging from the ceiling of the tunnel.

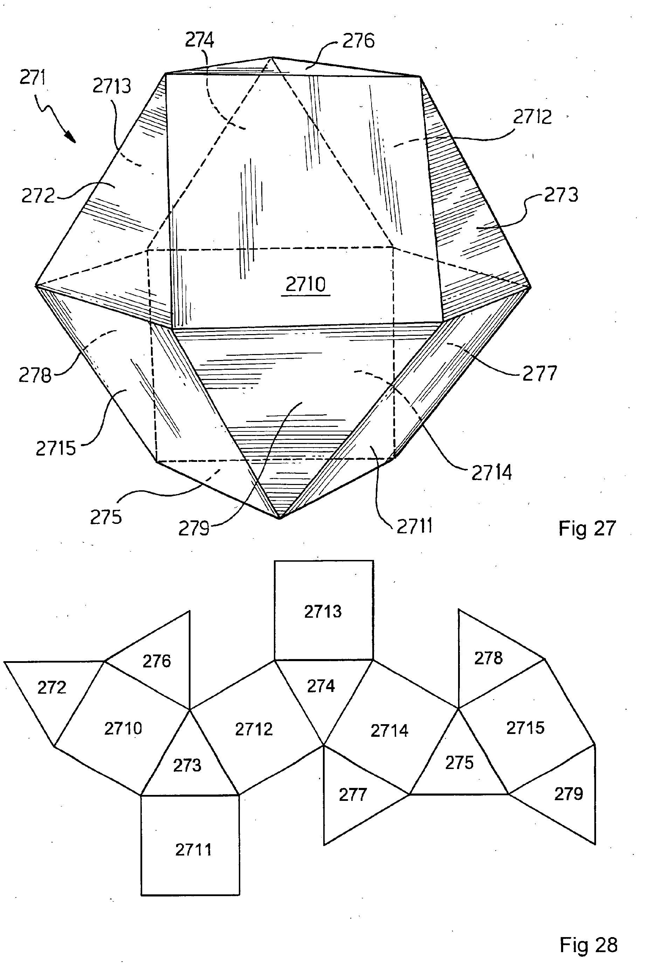

The shape of optical device 271 shown in Figures 27 and 28 differs from the shape of optical device 1 shown in Figures 1 and 2 in that the rectangular surfaces 10-15 are replaced by square surfaces 2710-2715. Therefore, the major triangular surfaces 2-5 and the minor triangular surfaces 6-9 are replaced by eight triangular surfaces 272-279 of the same size.

The various embodiments and applications illustrated above may be all equally applied, *mutatis mutandis,* to the shape shown in figures 27 and 28.

Making the optical device 271 with the quadrangular surfaces 2710-2715 of a square shape offers the advantage that it is not necessary to distort any circular cross-section light guides connected at such surfaces 2710-2715. This is particularly advantageous in the case of an optical device 271 made as sunlight collector (see for example Figures 24-26). Indeed, in such a case a light guide may be connected to the optical device 271 so that the optical device 271 may rotate about the axis of the light guide. Its essentially internally diffusing surfaces may in such a case be easily oriented towards the sun, through suitable motor means, during daytime in order to maximize the amount of captured light.

On the contrary, the optical device 271 is of greater size than optical device 1, the area of the major triangular surfaces 2-5 and respectively 272-275 being equal.

Coupling of the device with circular cross-section light guides without distorting them may in principle also occur at the major triangular surfaces 2-5 in the embodiments of optical device 1 of Figures 1-2, exchanging the nature of the various surfaces 2-11 with one another.

It is however preferred that the light input transparent surfaces be selected among the quadrangular surfaces 2-5 or respectively 272-275.

Those skilled in the art will be able, by referring to the several examples above, to select the nature of the various surfaces as a function of the desired optical function.

Experimental results relating to the various embodiments described above and to other also confirmed that the optical device according to the invention has an optimal performance in terms of luminosity. Without wanting to be bound to any theory, the inventors believe that said results are due to the particular angles that the various surfaces 2-15 form with one another, that would allow the light rays to follow the desired path from the light input surface or surfaces to the light output surface or surfaces.

## Claims

1. Optical device comprising a plurality of surfaces arranged according to the outer surface of an irregular polyhedron comprising eight surfaces having the shape of an equilateral triangle and six surfaces having a quadrangular shape, the sides of each quadrangular surface being each adjacent to a side of a respective triangular surface, wherein each surface of said plurality of surfaces is selected from the group comprised of an essentially transparent surface, an essentially internally reflecting surface, an essentially externally diffusing and internally reflecting surface, an essentially internally diffusing surface and an essentially opaque surface, at least one of said surfaces being a light input surface and at least one of said surfaces being a light output surface.

2. Optical device according to claim 1, **characterized in that** any essentially transparent surfaces are selected among virtual surfaces, that is free of material, and surfaces comprised of a highly transparent material, such as glass, methacrylate, polycarbonate, 3M^{TM} Radiant Color Film, 3M^{TM} Radiant Light Film, 3M^{TM} Radiant Color Film in association with glass, methacrylate or polycarbonate, 3M^{TM} Radiant Light Film association with glass, methacrylate or polycarbonate.

3. Optical device according to claim 1, **characterized in that** any essentially externally diffusing and internally reflecting surfaces are comprised of or comprise a TIR film, preferably an OLF film oriented with its side provided with micro-prisms outwardly of the polyhedron.

4. Optical device according to claim 3, **characterized in that** the TIR film is selected among 3M^{TM} Optical Lighting Film 2301, and 3M^{TM} Optical Lighting Film 2301 in association with 3M^{TM} Radiant Color Film or 3M^{TM} Radiant Light Film.

5. Optical device according to claim 1, **characterized in that** any essentially internally diffusing surfaces are comprised of or comprise a TIR film, preferably an OLF film, preferably oriented with its side provided with micro-prisms inwardly of the polyhedron.

6. Optical device according to claim 5, **characterized in that** the TIR film is selected among 3M^{TM} Optical Lighting Film 2301, and 3M^{TM} Optical Lighting Film 2301 in association with 3M^{TM} Radiant Color Film or 3M^{TM} Radiant Light Film.

7. Optical device according to claim 1, **characterized in that** the essentially internally reflecting surfaces are made of or internally coated with a highly reflecting material selected among a mirror surface, an optical VIKUITI High Reflectivity Visible Mirror Film, a TIR film, preferably 3M^{TM} Optical Lighting Film 2301 preferably oriented with the micro-prisms towards the inner of the optical device.

8. Optical device according to claim 1, **characterized in that** the at least a light output surface is selected in the group comprised of an essentially transparent surface and an essentially externally diffusing and internally reflecting surface.

9. Optical device according to claim 1, **characterized in that** the at least a light input surface is selected in the group comprised of an essentially transparent surface, an essentially internally diffusing surface, an essentially opaque surface coupled to an artificial light source internal to the optical device, and an essentially internally reflecting surface coupled to an artificial light source internal to the optical device.

10. Optical device according to claim 9, **characterized in that** said artificial light source is selected from the group comprised of a fluorescent lamp, a discharge lamp, an incandescent lamp, and a light guide lamp, particularly a TIR film light guide lamp.

11. Optical device according to claim 1, **characterized by** comprising at least an essentially transparent light input surface and at least a light output essentially externally diffusing and internally reflecting surface.

12. Optical device according to claim 1, **characterized by** comprising at least a light input essentially internally diffusing surface and a light output essentially transparent surface.

13. Optical device according to claim 1, **characterized by** comprising a light input essentially transparent surface and a light output essentially transparent surface, at least one of the remaining surfaces being essentially internally reflecting.

14. Optical device according to claim 13, **characterized by** further comprising at least an essentially externally diffusing and internally reflecting surface.

15. Optical device according to claim 1, **characterized by** comprising a light input or respectively output essentially transparent surface and at least two light output or respectively input essentially transparent surfaces, at least one of the remaining surfaces being essentially internally reflecting.

16. Optical device according to claim 15, **characterized by** further comprising at least an essentially externally diffusing and internally reflecting surface.

17. Optical device according to claim 1, **characterized in that** any light input or respectively output essentially transparent surfaces are selected among said quadrangular surfaces.

18. Optical device according to claim 1, **characterized in that** said surfaces having a quadrangular shape are of a rectangular shape and said eight surfaces having the shape of an equilateral triangle comprise four major triangular surfaces and four minor triangular surfaces, the sides of each major triangular surface being each adjacent to a major side of a respective rectangular surface, the sides of each minor triangular surface being each adjacent to a minor side of a respective rectangular surface, and the vertexes of each major triangular surface being each adjacent to a vertex of a respective minor triangular surface.

19. Optical device according to claim 1, **characterized in that** said surfaces having a quadrangular shape are of a square shape and said eight surfaces having the shape of an equilateral triangle are equal to each other, the sides of each triangular surface being each adjacent to a side of a respective square surface, and pairs of vertexes of triangular surfaces being adjacent to each other.

20. Optical system comprising at least an optical device according to one of claims 1 to 19 and at least a light guide or light guide lamp associated to a respective essentially transparent surface of the optical device.

21. Optical system comprising at least two optical devices according to one of claims 1 to 19, a surface of a first optical device being optically coupled to a surface of a second optical device.

22. Optical system according to claim 21, **characterized in that** the coupled surfaces of the optical devices coincide or are coupled by direct contact, through a light guide or through a light guide lamp.

23. Optical system according to claim 22, **characterized in that** said first optical device is a light collector and said second optical device is selected in the group comprised of an illuminator, a light beam deflector, a light beam deflector and illuminator, a light beam splitter, and a light beam splitter and illuminator.
